# EUROPÄISCHE PATENTANMELDUNG

(11) **EP 4 279 311 A2**
(43) Veröffentlichungstag der Anmeldung: **22.11.2023**
(21) Anmeldenummer: 23174234.7
(22) Anmeldetag: 19.05.2023
(51) Int. Cl.: B60K 15/05

(54) **FAHRZEUG MIT EINER KLAPPENEINHEIT FÜR EINE ÖFFNUNG AN DEM FAHRZEUG**

(30) Priorität: 20.05.2022 DE 102022205079
(71) Anmelder: Witte Automotive GmbH, 42551 Velbert (DE)
(72) Erfinder: MENSCH, Reinaldo, 42113 Wuppertal (DE); HÖHN, Ralf, 42549 Velbert (DE)
(74) Vertreter: Liedtke & Partner Patentanwälte

(57) **Zusammenfassung**

Die Erfindung betrifft ein Fahrzeug mit zumindest einer Fahrzeugaußenstruktur (1) und einer beweglichen Klappeneinheit (3) zur Abdeckung einer Öffnung (4) in der Fahrzeugaußenstruktur (1), insbesondere einer Ladeöffnung oder Tanköffnung, des Fahrzeugs,
wobei zumindest ein Gestiksensormodul (2) vorgesehen ist und die Klappeneinheit (3) zumindest eine Blende (3.1) umfasst, die an der Fahrzeugaußenstruktur (1) beweglich, insbesondere schwenkbeweglich, gelagert ist,
wobei die Blende (3.1) die Öffnung (4) in der Fahrzeugaußenstruktur (1) in einer geschlossenen Stellung (100) abdeckt und
wobei das Gestiksensormodul (2) eine äußere Gestiksensoreinheit (2.1), die außen im Bereich der Klappeneinheit (3) angeordnet ist, und eine innere Gestiksensoreinheit (2.2), die innen im Bereich der Klappeneinheit (3) angeordnet ist, umfasst, und
wobei die Blende (3.1)
- entweder bei Erfassung einer ersten Gestenbewegung (200) mittels der äußeren Gestiksensoreinheit (2.1) aus der geschlossenen Stellung (100) aus dem Bereich der Fahrzeugaußenstruktur (1) heraus automatisch in eine geöffnete Stellung (101) bewegbar ist, um die Öffnung (4) freizugeben, oder
- bei Erfassung einer zweiten Gestenbewegung (201) mittels der inneren Gestiksensoreinheit (2.2) und/oder der äußeren Gestiksensoreinheit (2.1) aus der geöffneten Stellung (101) automatisch in die geschlossene Stellung (100) bewegbar ist.

## Beschreibung

Die Erfindung betrifft ein Fahrzeug mit einer Klappeneinheit zur Abdeckung einer Öffnung, insbesondere einer Ladeöffnung oder Tanköffnung, an dem Fahrzeug.

An Fahrzeugen werden Öffnungen in der Fahrzeugkarosserie, wie zum Beispiel eine Ladeöffnung oder Tanköffnung, mittels einer Blende oder Klappe verschlossen, um eine Verschmutzung und einen Missbrauch zu verhindern.

Aufgabe der vorliegenden Erfindung ist es, ein Fahrzeug mit einer gegenüber dem Stand der Technik verbesserten Klappeneinheit zur Abdeckung einer Öffnung an einem Fahrzeug bereitzustellen, welche einfach aufgebaut und einfach zu bedienen ist.

Die Aufgabe wird erfindungsgemäß mit einem Fahrzeug gemäß den Merkmalen des Patentanspruchs 1 gelöst.

Das erfindungsgemäße Fahrzeug umfasst zumindest eine Fahrzeugaußenstruktur und eine Klappeneinheit (auch Ladeklappenmodul genannt) zur Abdeckung einer Öffnung in der Fahrzeugaußenstruktur, insbesondere einer Ladeöffnung oder Tanköffnung, des Fahrzeugs, wobei zumindest ein Multisensormodul, insbesondere ein Berührungs- und/oder Gestiksensormodul, vorgesehen ist und die Klappeneinheit zumindest eine Blende umfasst, die an der Fahrzeugaußenstruktur beweglich, insbesondere schwenkbeweglich oder verfahrbar, gelagert ist, wobei die Blende in einer geschlossenen Stellung die Öffnung in der Fahrzeugaußenstruktur abdeckt und in einer geöffneten Stellung einen Zugang zu der Öffnung freigibt.

Unter einem Multisensormodul wird insbesondere ein Sensormodul mit einer Erfassung mehrerer unterschiedlicher Erfassungsbereiche, zum Beispiel eines vorderen (äußeren) Erfassungsbereiches und eines hinteren (inneren) Erfassungsbereiches, und/oder mehrerer unterschiedlicher Erfassungsfunktionen, zum Beispiel einer Öffnungsfunktion und einer Schließfunktion, und/oder mehrerer unterschiedlicher Erfassungsarten, zum Beispiel einer Gestenerfassung und einer Berührungserfassung, verstanden.

Das Multisensormodul ist beispielsweise eingerichtet, sowohl bei geschlossener Blende einen vorgegebenen ersten Betätigungsvorgang, insbesondere eine Geste und/oder eine Berührung, zu erfassen und einen Öffnungsvorgang der Blende auszulösen als auch bei geöffneter Blende einen vorgegebenen zweiten Betätigungsvorgang, insbesondere eine Geste und/oder eine Berührung, zu erfassen und einen Schließvorgang der Blende auszulösen.

In einer möglichen Ausführungsform ist das Multisensormodul als mindestens eine Berührungssensoreinheit und/oder eine Gestiksensoreinheit ausgebildet. Bevorzugt ist das Multisensormodul Teil der Klappeneinheit, insbesondere der Blende. Alternativ oder zusätzlich kann das Multisensormodul Teil der Fahrzeugaußenstruktur sein.

Eine Weiterbildung sieht vor, dass das Multisensormodul als ein inneres Sensormodul ausgebildet ist, das in die Klappeneinheit, insbesondere in die Blende, integriert ist. Beispielsweise kann das innere Sensormodul an einer Rückseite der Blende und/oder in/an einer Trägereinheit der Blende angeordnet sein. Beispielsweise ist das Multisensormodul zwischen der Rückseite der Blende und einer in Richtung der Blende gerichteten Oberflächenseite der Trägereinheit angeordnet. Das Multisensormodul kann mehrteilig, insbesondere aus mehreren Sensorteilmodulen, zum Beispiel einem ortsfesten Sensorteilmodul und einem flexiblen Sensorteilmodul, ausgebildet sein.

Das Multisensormodul kann darüber hinaus mehrteilig ausgebildet sein und beispielsweise eine äußere Gestiksensoreinheit, die außen im Bereich der Klappeneinheit angeordnet ist, und eine innere Gestiksensoreinheit umfassen, die innen im Bereich der Klappeneinheit angeordnet ist. Die Blende (auch Ladeklappe genannt) ist bei Erfassung einer Gestenbewegung mittels der äußeren Gestiksensoreinheit aus der geschlossenen Stellung aus dem Bereich der Fahrzeugaußenstruktur heraus automatisch in eine geöffnete Stellung bewegbar, insbesondere verschwenkbar oder verfahrbar, um die Öffnung freizugeben, oder bei Erfassung einer Gestenbewegung mittels der inneren Gestiksensoreinheit aus der geöffneten Stellung automatisch in die geschlossene Stellung bewegbar.

Die äußere Gestiksensoreinheit, insbesondere ein Erfassungsbereich dieser, ist insbesondere bei geschlossener Klappeneinheit von außen zugänglich. Die äußere Gestiksensoreinheit kann bei geöffneter Klappeneinheit deaktiviert sein und/oder nicht von außen zugänglich sein. Die innere Gestiksensoreinheit, insbesondere ein Erfassungsbereich dieser, ist insbesondere bei geöffneter Klappeneinheit von außen zugänglich.

Gemäß einer Weiterbildung kann die Blende in der geschlossenen Stellung bündig zur Fahrzeugaußenstruktur angeordnet sein. Die Klappeneinheit ist insbesondere ein Ladeklappenmodul mit einer elektrisch angetriebenen Ladeklappe (auch Ladeblende oder Ladedeckel genannt) oder ein Tankklappenmodul mit einer elektrisch angetriebenen Tankklappe (auch Tankblende oder Tankdeckel genannt) für ein Fahrzeug.

Bevorzugt kann das Multisensormodul, insbesondere die Gestiksensoreinheit und/oder die Berührungssensoreinheit, Teil der Fahrzeugaußenstruktur und/oder der Klappeneinheit sein.

Zum Beispiel kann das Multisensormodul, optional die äußere Gestiksensoreinheit, oberhalb, unterhalb und/oder seitlich der Öffnung und/oder auf einer Außenseite der beweglichen Klappeneinheit angeordnet sein. Insbesondere kann das Multisensormodul, optional die äußere Gestiksensoreinheit, in einem äußeren Oberflächenabschnitt der Fahrzeugaußenstruktur und/oder in einer äußeren Blendenoberfläche der Klappeneinheit integriert sein.

Zusätzlich kann die innere Gestiksensoreinheit an einer Innenseite der beweglichen Klappeneinheit, insbesondere an einer Innenseite der Blende und/oder an einer Innenseite eines Blendenträgers, angeordnet sein. Zum Beispiel kann die innere Gestiksensoreinheit in einer inneren Blendenoberfläche der Klappeneinheit und/oder in einer inneren Trägeroberfläche des Blendenträgers integriert sein.

Zusätzlich kann das Gestiksensormodul eine Berührungssensoreinheit (auch touch sensor genannt) umfassen, die in einem äußeren Oberflächenabschnitt der Fahrzeugaußenstruktur und/oder in einer äußeren Blendenoberfläche der Klappeneinheit integriert ist. Mit anderen Worten: Eine solche Kombination eines Gestiksensormoduls (auch Gestiksensoreinheit genannt) und einer Berührungssensoreinheit bildet ein Multisensormodul mit mindestens zwei verschiedenen Erfassungsarten, Erfassungsfunktionen und/oder Erfassungsbereichen. Beispielsweise kann das Gestiksensormodul als ein kapazitiver Berührungssensor oder ein induktiver Berührungssensor ausgebildet sein.

Beispielsweise kann durch eine Handbewegung außen am Gestiksensormodul, optional im Bereich der äußeren Gestiksensoreinheit, bei geschlossener Blende eine Öffnungsfunktion der Klappeneinheit erfolgen. Durch eine Handbewegung innen am Gestiksensormodul, optional im Bereich der inneren Gestiksensoreinheit, bei geöffneter Blende, insbesondere im Bereich der Innenseite der geöffneten Klappeneinheit, kann eine Schließfunktion der Klappeneinheit erfolgen. Hierzu ist das Gestiksensormodul, insbesondere die Berührungssensoreinheit und/oder Gestiksensoreinheit, optional die äußere Gestiksensoreinheit und/oder die innere Gestiksensoreinheit, eingerichtet, eine, insbesondere vorbestimmte, Geste oder Gestenbewegung und/oder eine Berührung eines Benutzers zu erkennen und anhand der erkannten, insbesondere vorbestimmten, Geste oder Gestenbewegung und/oder Berührung eine Funktion der Klappeneinheit zu aktivieren, insbesondere eine Öffnungsfunktion oder eine Schließfunktion der Klappeneinheit zu aktivieren.

Beispielsweise kann das Multisensormodul, optional die äußere Gestiksensoreinheit, eingerichtet sein, bei einer ersten Gestenbewegung, insbesondere eine Handbewegung eines Nutzers, oder Berührung im äußeren Bereich der geschlossenen Blende eine Öffnungsfunktion der Klappeneinheit zu aktivieren oder auszulösen, insbesondere die Blende zu öffnen. Alternativ oder zusätzlich kann das Multisensormodul, optional die innere Gestiksensoreinheit, eingerichtet sein, durch eine zweite Gestenbewegung, insbesondere eine Handbewegung des Nutzers, und/oder Berührung im inneren Bereich der geöffneten Blende eine Schließfunktion der Klappeneinheit zu aktivieren oder auszulösen, insbesondere die Blende zu schließen.

Zum Verstellen der Klappeneinheit, insbesondere zum Verstellen der Blende, kann das Multisensormodul, insbesondere das Gestiksensormodul (auch Gestiksensoreinheit) und/oder die Berührungssensoreinheit, mit einem Verstellmechanismus, insbesondere einer Antriebseinheit, signaltechnisch gekoppelt sein. Die Antriebseinheit kann zum Beispiel ein Elektromotor sein.

Ausführungsbeispiele der Erfindung werden anhand von Zeichnungen näher erläutert. Dabei zeigen:
- Figur 1: schematisch eine Fahrzeugaußenstruktur eines Fahrzeugs mit einem Multisensormodul und einer Klappeneinheit in einer geschlossenen Stellung,
- Figur 2: schematisch die Fahrzeugaußenstruktur mit dem Multisensormodul und der Klappeneinheit in einer geöffneten Stellung,
- Figur 3: schematisch die Fahrzeugaußenstruktur mit dem Multisensormodul und der Klappeneinheit in der geöffneten Stellung und vor einer Schließbewegung,
- Figur 4: schematisch ein Beispiel für ein Multisensormodul,
- Figur 5: schematisch eine Fahrzeugaußenstruktur eines Fahrzeugs mit einem integrierten Multisensormodul und einer Klappeneinheit in einer geschlossenen Stellung, und
- Figur 6: schematisch die Fahrzeugaußenstruktur mit dem integrierten Multisensormodul und der Klappeneinheit in der geöffneten Stellung und vor einer Schließbewegung.

Einander entsprechende Teile sind in allen Figuren mit den gleichen Bezugszeichen versehen.

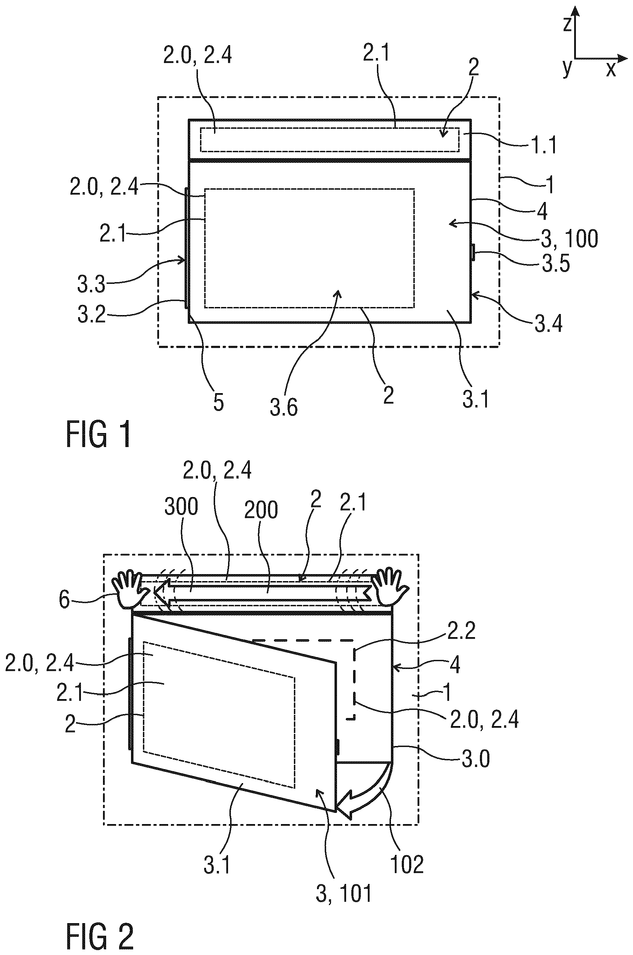

**Figur 1** zeigt schematisch eine Fahrzeugaußenstruktur 1 eines nicht näher dargestellten Fahrzeugs mit einem Multisensormodul 2 und einer Klappeneinheit 3 in einer geschlossenen Stellung 100.

Die Fahrzeugaußenstruktur 1 weist eine Öffnung 4, insbesondere eine Mulde oder Durchgangsöffnung, zu einer nicht dargestellten Batterie oder einem nicht dargestellten Tank auf.

Die Klappeneinheit 3 ist als eine bewegliche Einheit zur Abdeckung der Öffnung 4 in der Fahrzeugaußenstruktur 1, insbesondere einer Ladeöffnung oder Tanköffnung, ausgebildet.

Die Klappeneinheit 3 umfasst zumindest eine Blende 3.1, die an der Fahrzeugaußenstruktur 1 beweglich, insbesondere schwenkbeweglich oder verfahrbar, gelagert ist. Die Blende 3.1 ist zum Beispiel als ein Verschlussdeckel oder eine Verschlussklappe für die Lade- oder Tanköffnung ausgebildet. Die Blende 3.1 kann scheibenförmig ausgebildet sein. Alternativ kann die Blende 3.1 topfförmig ausgebildet sein.

Von der Fahrzeugaußenstruktur 1 weggewandt weist die Blende 3.1 eine mit der Fahrzeugaußenhaut korrespondierende Oberflächenform, insbesondere eine weitgehend ebene oder leicht gewölbte Form, auf. Die Blende 3.1 schließt in der geschlossenen Stellung 100 insbesondere bündig mit der Fahrzeugaußenstruktur 1 ab.

Die Blende 3.1 ist derart eingerichtet, dass diese sowohl elektrisch als auch manuell betätigt und/oder verstellt werden kann.

Die Verstellung der Blende 3.1 kann bevorzugt elektrisch erfolgen. Ein nicht näher dargestellter elektrischer Antriebsmechanismus ist zum Beispiel mit einem Verstellmechanismus 3.2 für die Blende 3.1 gekoppelt und kann beispielsweise als ein Motorantrieb, insbesondere ein Spindelantrieb oder Zahnradantrieb, ausgebildet sein. Der Antriebsmechanismus und der Verstellmechanismus 3.2 sind an einem Antriebsende 3.3 der Blende 3.1 angeordnet und mit dieser gekoppelt.

An einem dem Antriebsende 3.3 gegenüberliegenden Halteende 3.4 der Blende 3.1 kann diese mit einem Verschlussmechanismus 3.5, zum Beispiel einem Rasthaken, versehen sein. Die Blende 3.1 ist mittels des Verschlussmechanismus 3.5 an der Fahrzeugaußenstruktur 1 oder einer Rahmenstruktur lösbar verriegelbar. Beispielsweise ist der Verschlussmechanismus 3.5 als ein Rastmechanismus, insbesondere eine formschlüssige Rastverbindung, ausgebildet. In der geschlossenen Stellung 100 der Blende 3.1 ist somit auf dem antriebsabgewandten Halteende 3.4 der Blende 3.1 ein Gegenlager für das Antriebsende 3.3 der Blende 3.1 gebildet.

Die Blende 3.1 kann in Richtung der Fahrzeugaußenstruktur 1 innenseitig mit einer nicht dargestellten Dichtung, zum Beispiel einem Dichtungsring, Dichtungslippen und/oder Dichtungsstrang, versehen sein. Zusätzlich oder alternativ kann ein Rand der Öffnung 4 in Richtung der Blende 3.1 mit einer nicht dargestellten Dichtung, insbesondere einem Dichtungsring, Dichtungslippen und/oder Dichtungsstrang, versehen sein.

Der Verstellmechanismus 3.2 kann alternativ mit einem manuellen, nicht näher dargestellten Betätigungsmechanismus für die Blende 3.1 gekoppelt sein. Ein solcher manueller Betätigungsmechanismus ist insbesondere direkt mit der Blende 3.1 gekoppelt und kann beispielsweise als eine Druckbetätigung, insbesondere eine sogenannte Push-Push-Mechanik, an der Blende 3.1 ausgebildet sein.

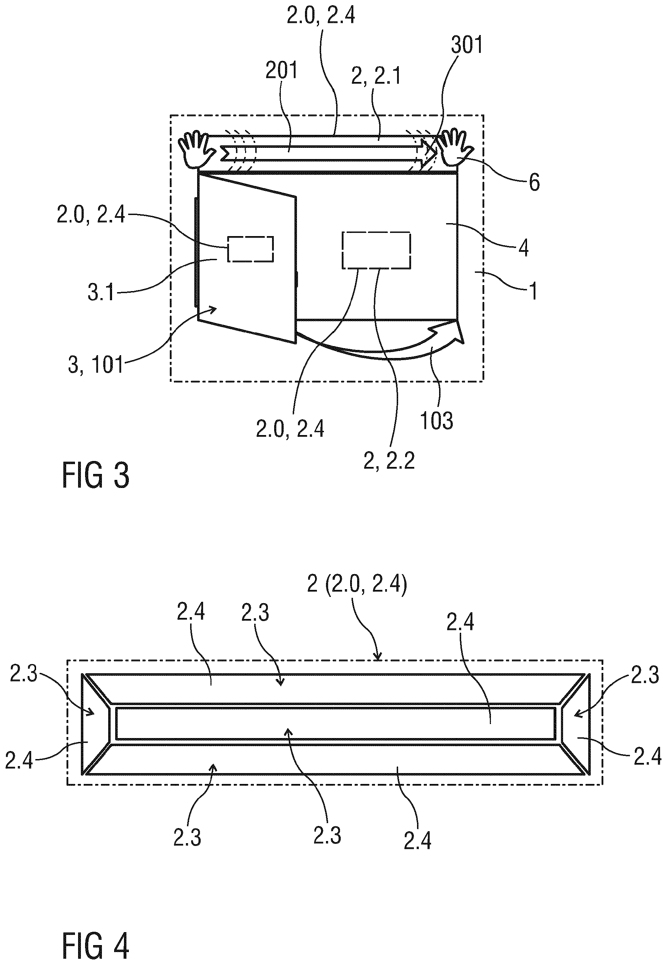

Mittels des elektrisch angetriebenen Verstellmechanismus 3.2 ist die Blende 3.1 sowohl bei einer Öffnungsbewegung 102 (dargestellt in **Figur 2**) der Blende 3.1 aus der geschlossenen Stellung 100 in eine geöffnete Stellung 101 (dargestellt in **Figur 2**) als auch bei einer Schließbewegung 103 (dargestellt in **Figur 3**) der Blende 3.1 aus der geöffneten Stellung 101 in die geschlossene Stellung 100 bewegbar, insbesondere um eine Drehachse 5 schwenkbar.

Zur Bewegung der Blende 3.1 aus der geschlossenen Stellung 100 ist der elektrisch bewegbare Verstellmechanismus 3.2, insbesondere dessen Antriebsmechanismus, mit dem Multisensormodul 2 signaltechnisch gekoppelt.

Das Multisensormodul 2 ist insbesondere ein Sensormodul mit einer Erfassung mehrerer unterschiedlicher Erfassungsbereiche, zum Beispiel eines vorderen (äußeren) Erfassungsbereiches und eines hinteren (inneren) Erfassungsbereiches, und/oder mehrerer unterschiedlicher Erfassungsfunktionen, zum Beispiel einer Öffnungsfunktion und einer Schließfunktion, und/oder mehrerer unterschiedlicher Erfassungsarten, zum Beispiel einer Gestenerfassung und einer Berührungserfassung.

Das Multisensormodul 2 ist beispielsweise eingerichtet, sowohl bei geschlossener Blende 3.1 einen vorgegebenen ersten Betätigungsvorgang, insbesondere eine Geste und/oder eine Berührung, zu erfassen und einen Öffnungsvorgang oder eine Öffnungsbewegung 102 der Blende 3.1 (dargestellt in Figur 2) auszulösen als auch bei geöffneter Blende 3.1 einen vorgegebenen zweiten Betätigungsvorgang, insbesondere eine Geste und/oder eine Berührung, zu erfassen und einen Schließvorgang oder eine Schließbewegung 103 der Blende 3.1 auszulösen.

In einer möglichen Ausführungsform kann das Multisensormodul 2 mindestens eine integrierte Berührungssensoreinheit 2.4 und/oder eine integrierte Gestiksensoreinheit 2.0 umfassen. Dabei kann das Multisensormodul 2 als ein integriertes Modul ausgebildet sein und insbesondere Teil der Klappeneinheit 3, zum Beispiel Teil der Blende 3.1, sein. Alternativ oder zusätzlich kann das Multisensormodul 2 integraler Teil der Fahrzeugaußenstruktur 1 sein und beispielsweise oberhalb der Blende 3.1 angeordnet sein.

Das Multisensormodul 2 kann mehrteilig ausgebildet sein. Das Multisensormodul 2 kann insbesondere aus mehreren Sensorteilmodulen, zum Beispiel einem ortsfesten Sensorteilmodul und einem flexiblen Sensorteilmodul, gebildet sein. Die integrierte Berührungssensoreinheit 2.4 kann insbesondere als ein Tastsensor oder Drucksensor ausgebildet sein. Die integrierte Gestiksensoreinheit 2.0 kann insbesondere als ein kapazitiver Gestensensor oder ein induktiver Gestensensor ausgebildet sein.

Beispielsweise kann das integrierte Multisensormodul 2 an einer Rückseite der Blende 3.1 und/oder in/an einer Trägereinheit der Blende 3.1 angeordnet sein. Beispielsweise kann das Multisensormodul 2 zwischen der Rückseite der Blende 3.1 und einer in Richtung der Blende 3.1 gerichteten Oberflächenseite der Trägereinheit angeordnet sein.

Das Multisensormodul 2 kann zusätzlich eine äußere Gestiksensoreinheit 2.1 umfassen. Die äußere Gestiksensoreinheit 2.1 ist außen im Bereich der Klappeneinheit 3 angeordnet. Die äußere Gestiksensoreinheit 2.1 kann zum Beispiel oberhalb der Öffnung 4 und/oder oberhalb der Klappeneinheit 3 in einen äußeren Oberflächenabschnitt 1.1 der Fahrzeugaußenstruktur 1 und/oder in einer äußeren Blendenoberfläche 3.6 der beweglichen Blende 3.1 integriert sein.

Beispielsweise kann die äußere Gestiksensoreinheit 2.1 in eine äußere Lackschicht integriert, insbesondere umspritzt, angeordnet sein.

Alternativ oder zusätzlich kann das Multisensormodul 2 weitere integrierte Gestiksensoreinheiten 2.0, optionale äußere Gestiksensoreinheiten 2.1 und/oder optionale oder integrierte Berührungssensoreinheiten 2.4 umfassen, die seitlich und/oder unterhalb der Öffnung 4 und/oder seitlich und/oder unterhalb der Klappeneinheit 3 und/oder auf einer Außenseite der Klappeneinheit 3, insbesondere der äußeren Blendenoberfläche 3.6 der beweglichen Blende 3.1, integriert sind.

Die Berührungssensoreinheit 2.4 kann beispielsweise Teil der äußeren Gestiksensoreinheit 2.1 oder der integrierten Gestiksensoreinheit 2.0 sein, insbesondere einen Abschnitt dieser bilden. Bevorzugt kann die gesamte äußere Gestiksensoreinheit 2.1 zusätzlich als Berührungssensoreinheit 2.4 und als ein Multisensormodul 2 ausgebildet sein. Mit anderen Worten: Das Multisensormodul 2 kann als eine Kombination der integrierten Gestiksensoreinheit 2.0, der äußeren Gestiksensoreinheit 2.1 und/oder der integrierten Berührungssensoreinheit 2.4 ausgebildet sein. Hierdurch kann ein Öffnen der Klappeneinheit 3 sowohl durch Gestenbetätigung mittels der Gestiksensoreinheit 2.0 und/oder 2.1 als auch durch eine manuelle Betätigung mittels der integrierten Berührungssensoreinheit 2.4 des Multisensormoduls 2 aktiviert oder ausgelöst werden.

**Figur 2** zeigt schematisch die Fahrzeugaußenstruktur 1 mit dem Multisensormodul 2 und der Klappeneinheit 3 in der geöffneten Stellung 101.

Die Blende 3.1 ist an einem Blendenträger 3.0 beweglich gelagert. Im gezeigten Beispiel ist die Blende 3.1 schwenkbar am Blendenträger 3.0 gelagert. Alternativ kann die Blende 3.1 auch herausfahrbar am Blendenträger 3.0 gehalten sein (nicht dargestellt).

Zum Öffnen der Klappeneinheit 3 ist das Multisensormodul 2 vorgesehen, welches eingerichtet ist, eine erste Gestenbewegung 200, insbesondere eine vorbestimmte Bewegung gemäß Pfeil 300 einer Hand 6 eines Nutzers, im Bereich der integrierten Gestiksensoreinheit 2.0 und/oder der äußeren Gestiksensoreinheit 2.1 zu erfassen und zu erkennen. Bei erkannter erster Gestenbewegung 200 ist die Blende 3.1 mittels einer Steuerung des Multisensormoduls 2 aus der geschlossenen Stellung 100 aus dem Bereich der Fahrzeugaußenstruktur 1 heraus automatisch in die geöffnete Stellung 101 bewegbar, insbesondere verschwenkbar oder verfahrbar, um die Öffnung 4 freizugeben.

Anstelle der horizontalen ersten Gestenbewegung 200 kann auch eine andere, die Öffnungsbewegung 102 repräsentierende Gestik, zum Beispiel eine vertikale Gestenbewegung, zur Freigabe der Öffnungsbewegung 102 vorbestimmt und hinterlegt sein. Zusätzlich oder alternativ kann bei einer Ausbildung zumindest eines Teils des Multisensormoduls 2 oder der äußeren Gestiksensoreinheit 2.1 als Berührungssensoreinheit 2.4 auch eine mittels der Berührungssensoreinheit 2.4 erkannte Berührung zur Freigabe der Öffnungsbewegung 102 verwendet werden.

Zusätzlich kann in die Klappeneinheit 3 eine innere Gestiksensoreinheit 2.2 integriert sein, wobei in der geöffneten Stellung 101 der Klappeneinheit 3 eine eine Schließbewegung 103 repräsentierende Gestik, zum Beispiel eine horizontale oder vertikale Gestenbewegung, mittels der inneren Gestiksensoreinheit 2.2 detektiert wird und eine entsprechende Schließfunktion ausgelöst wird. Die innere Gestiksensoreinheit 2.2 kann beispielsweise in einem Blendenträger 3.0 oder in der Blende 3.1 integriert sein.

Mit anderen Worten ist das Multisensormodul 2, insbesondere die integrierte Gestiksensoreinheit 2.0, die äußere Gestiksensoreinheit 2.1, optional in Kombination mit der Berührungssensoreinheit 2.4, eingerichtet, die vorbestimmte erste Gestenbewegung 200 und optional die Berührung eines Benutzers zu erkennen und anhand der erkannten vorbestimmten ersten Gestenbewegung 200 beziehungsweise der Berührung eine Funktion der Klappeneinheit 3 zu aktivieren, insbesondere die Öffnungsfunktion zu aktivieren.

**Figur 3** zeigt schematisch die Fahrzeugaußenstruktur 1 mit dem Multisensormodul 2 und der Klappeneinheit 3 in der geöffneten Stellung 101 und vor einer Schließbewegung 103.

Zum Schließen der Klappeneinheit 3 ist das Multisensormodul 2 vorgesehen, welches eingerichtet ist, eine zweite Gestenbewegung 201, insbesondere eine vorbestimmte Bewegung gemäß Pfeil 301 der Hand 6 eines Nutzers im Bereich der äußeren Gestiksensoreinheit 2.1, zu erkennen. Bei erkannter zweiter Gestenbewegung 201 ist die Blende 3.1 mittels einer Steuerung des Gestiksensormoduls 2 aus der geöffneten Stellung 101 automatisch in die geschlossene Stellung 100 bewegbar, insbesondere verschwenkbar oder verfahrbar, um die Öffnung 4 wieder zu schließen.

Mit anderen Worten ist das Multisensormodul 2, insbesondere die äußere Gestiksensoreinheit 2.1, eingerichtet, die vorbestimmte zweite Gestenbewegung 201 eines Benutzers zu erkennen und anhand der erkannten vorbestimmten zweiten Gestenbewegung 201 eine Funktion der Klappeneinheit 3 zu aktivieren, insbesondere die Schließfunktion zu aktivieren.

Das Multisensormodul 2 für die Klappeneinheit 3 ermöglicht eine intuitive Betätigung der Klappeneinheit 3.

**Figur 4** zeigt schematisch ein Beispiel für ein Multisensormodul 2. Das Multisensormodul 2, insbesondere die jeweilige Gestiksensoreinheit 2.0, 2.1, 2.2, kann mehrere, beispielsweise fünf, Sensorflächen 2.3 umfassen. Die Sensorflächen 2.3 können eingerichtet sein, die jeweilige Gestenbewegung 200, 201 zu erkennen. Darüber hinaus sind die Sensorflächen 2.3 derart eingerichtet, dass diese Fehlauslösungen, zum Beispiel durch Regen, Schnee, Hochdruckreiniger, Waschstraßen, etc., sicher erkennen und mittels entsprechend integrierter Software-Filter unterdrücken.

Zusätzlich können die Sensorflächen 2.3 als Berührungssensoreinheit 2.4 ausgebildet sein. Hierdurch kann ein Öffnen oder Schließen der Klappeneinheit 3 sowohl durch Gestenbetätigung mittels der Sensorflächen 2.3 als auch durch eine manuelle Betätigung mittels der Berührungssensoreinheit 2.4 des Multisensormoduls 2 aktiviert oder ausgelöst werden.

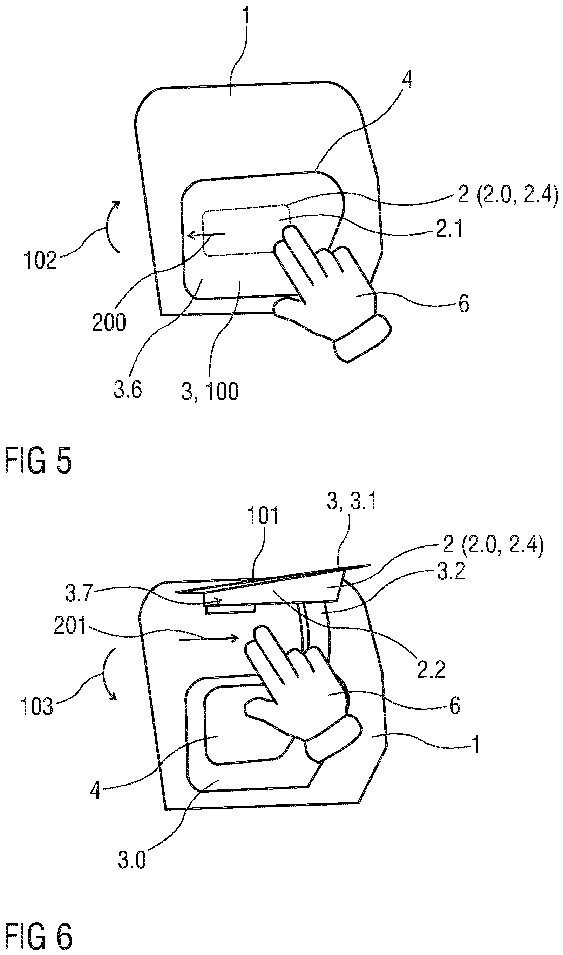

**Figur 5** zeigt schematisch die Fahrzeugaußenstruktur 1 mit einem in die Klappeneinheit 3, insbesondere in die äußere Blendenoberfläche 3.6, integrierten Multisensormodul 2 und optional einer integrierten äußeren Gestiksensorsensoreinheit 2.1 und der Klappeneinheit 3 in der geschlossenen Stellung 100.

Die Funktion dieser in die Klappeneinheit 3 integrierten äußeren Gestiksensorsensoreinheit 2.1 entspricht der jeweiligen Funktion des zuvor beschriebenen, in die Blende 3.1 integrierten Multisensormodul 2, des zuvor beschriebenen, in die Blende 3.1 integrierten äußeren Gestiksensoreinheit 2.1, des zuvor beschriebenen, in die Blende 3.1 und/oder in den Blendenträger 3.0 integrierten inneren Gestiksensoreinheit 2.2 und/oder des zuvor beschriebenen, in die Fahrzeugaußenstruktur 1 integrierten äußeren Gestiksensoreinheit 2.1.

Die in die äußere Blendenoberfläche 3.6 der beweglichen Blende 3.1 der Klappeneinheit 3 integrierte äußere Gestiksensorsensoreinheit 2.1 erkennt eine erste Gestenbewegung 200 der Hand 6 eines Nutzers und aktiviert eine entsprechende Öffnungsbewegung 102. Der Aufbau der Klappeneinheit 3 nach **Figuren 5 und 6** unterscheidet sich vom Aufbau der Klappeneinheit 3 nach **Figuren 1 bis 4** darin, dass anstelle der Drehachse 5 ein Verstellmechanismus 3.2 vorgesehen ist, der eine bogenförmige Ausstellbewegung der Klappeneinheit 3 raus aus der Öffnung 4 nach oben in eine geöffnete Stellung 101 oberhalb der Öffnung 4 bewirkt, wie in **Figur 6** gezeigt.

**Figur 6** zeigt schematisch die Fahrzeugaußenstruktur 1 mit dem in die Klappeneinheit 3 integrierten Multisensormodul 2 und der optional in die Klappeneinheit 3 integrierten inneren Gestiksensoreinheit 2.2 und der Klappeneinheit 3 in der geöffneten Stellung 101 und vor einer Schließbewegung 103.

Die innere Gestiksensoreinheit 2.2 ist innen im Bereich der Klappeneinheit 3 angeordnet. Die innere Gestiksensoreinheit 2.2 kann im Blendenträger 3.0, der in der Fahrzeugaußenstruktur 1 formschlüssig angeordnet und gehalten ist, und/oder an einer inneren Blendenoberfläche 3.7 der beweglichen Blende 3.1 angeordnet, insbesondere integriert sein.

Die in die Klappeneinheit 3 integrierte innere Gestiksensorsensoreinheit 2.2 erkennt eine zweite Gestenbewegung 201 der Hand 6 eines Nutzers und aktiviert eine entsprechende Schließbewegung 103.

In die Klappeneinheit 3, insbesondere in die Blende 3.1 kann auch nur ein einziges Multisensormodul 2 mit integrierter Gestiksensoreinheit 2.0 und/oder integrierter Berührungssensoreinheit 2.4 integriert oder angeordnet sein, wobei das Multisensormodul 2 eingerichtet ist, sowohl bei geschlossener Blende 3.1 als auch bei geöffneter Blende 3.1 außen beziehungsweise innen die jeweilige Gestenbewegung 200, 201 und/oder eine Berührung außen auf einer Außenoberfläche der Blende 3.1 beziehungsweise innen auf einer Innenoberfläche auf der Blende 3.1 zu erfassen.

### BEZUGSZEICHENLISTE

- 1: Fahrzeugaußenstruktur
- 1.1: äußerer Oberflächenabschnitt
- 2: Multisensormodul
- 2.0: integrierte Gestiksensoreinheit
- 2.1: äußere Gestiksensoreinheit
- 2.2: innere Gestiksensoreinheit
- 2.3: Sensorfläche
- 2.4: integrierte Berührungssensoreinheit
- 3: Klappeneinheit
- 3.0: Blendenträger
- 3.1: Blende
- 3.2: Verstellmechanismus
- 3.3: Antriebsende
- 3.4: Halteende
- 3.5: Verschlussmechanismus
- 3.6: äußere Blendenoberfläche
- 3.7: innere Blendenoberfläche
- 4: Öffnung
- 5: Drehachse
- 6: Hand

- 100: geschlossene Stellung
- 101: geöffnete Stellung
- 102: Öffnungsbewegung
- 103: Schließbewegung

- 200: erste Gestenbewegung
- 201: zweite Gestenbewegung

- 300,301: Pfeil

## Patentansprüche

1. Fahrzeug mit zumindest einer Fahrzeugaußenstruktur (1) und einer beweglichen Klappeneinheit (3) zur Abdeckung einer Öffnung (4) in der Fahrzeugaußenstruktur (1), insbesondere einer Ladeöffnung oder Tanköffnung, des Fahrzeugs,
wobei zumindest ein Multisensormodul (2) vorgesehen ist und die Klappeneinheit (3) zumindest eine Blende (3.1) umfasst, die an der Fahrzeugaußenstruktur (1) beweglich, insbesondere schwenkbeweglich, gelagert ist,
wobei die Blende (3.1) in einer geschlossenen Stellung (100) die Öffnung (4) in der Fahrzeugaußenstruktur (1) abdeckt und in einer geöffneten Stellung (101) einen Zugang zu der Öffnung (4) freigibt,
wobei das Multisensormodul (2) eingerichtet ist, sowohl bei geschlossener Blende einen vorgegebenen ersten Betätigungsvorgang zu erfassen und einen Öffnungsvorgang der Blende auszulösen als auch bei geöffneter Blende einen vorgegebenen zweiten Betätigungsvorgang zu erfassen und einen Schließvorgang der Blende auszulösen.

2. Fahrzeug nach Anspruch 1,
**dadurch gekennzeichnet, dass** das Multisensormodul (2) als mindestens eine Berührungssensoreinheit (2.4) und/oder eine Gestiksensoreinheit (2.1) ausgebildet ist.

3. Fahrzeug nach Anspruch 1 oder 2,
wobei das Multisensormodul (2) Teil der Fahrzeugaußenstruktur (1) und/oder Teil der Klappeneinheit (3) ist.

4. Fahrzeug nach Anspruch 1 oder 2,
**dadurch gekennzeichnet, dass** das Multisensormodul (2) als ein inneres Sensormodul ausgebildet ist, das in die Klappeneinheit (3), insbesondere in die Blende (3.1), integriert ist.

5. Fahrzeug nach Anspruch 4,
**dadurch gekennzeichnet, dass** das innere Sensormodul an einer Rückseite der Blende (3.1) und/oder in einer Trägereinheit der Blende (3.1) angeordnet ist.

6. Fahrzeug nach einem der vorhergehenden Ansprüche,
**dadurch gekennzeichnet, dass** das Multisensormodul (2) zusätzlich eine äußere Gestiksensoreinheit (2.1), die außen im Bereich der Klappeneinheit (3) angeordnet ist, und eine innere Gestiksensoreinheit (2.2), die innen im Bereich der Klappeneinheit (3) angeordnet ist, umfasst, und
wobei die Blende (3.1)
- entweder bei Erfassung einer ersten Gestenbewegung (200) mittels der äußeren Gestiksensoreinheit (2.1) aus der geschlossenen Stellung (100) aus dem Bereich der Fahrzeugaußenstruktur (1) heraus automatisch in eine geöffnete Stellung (101) bewegbar ist, um die Öffnung (4) freizugeben, oder
- bei Erfassung einer zweiten Gestenbewegung (201) mittels der inneren Gestiksensoreinheit (2.2) und/oder der äußeren Gestiksensoreinheit (2.1) aus der geöffneten Stellung (101) automatisch in die geschlossene Stellung (100) bewegbar ist.

7. Fahrzeug nach einem der vorhergehenden Ansprüche 2 bis 6,
wobei das Multisensormodul (2), optional die äußere Gestiksensoreinheit (2.1) und/oder die innere Gestiksensoreinheit (2.2), eingerichtet sind beziehungsweise ist, als einen der Betätigungsvorgänge eine Geste oder eine Gestenbewegung (200, 201) und/oder eine Berührung eines Benutzers zu erfassen und anhand der erfassten Geste oder Gestenbewegung (200, 201) und/oder Berührung eine Funktion der Klappeneinheit (3) zu aktivieren.

8. Fahrzeug nach Anspruch 7,
wobei das Multisensormodul (2), optional die äußere Gestiksensoreinheit (2.1) eingerichtet ist, bei Erfassung einer ersten Gestenbewegung (200) oder Berührung im äußeren Bereich der geschlossenen Blende (3.1) eine Öffnungsbewegung (102) der Klappeneinheit (3) zu aktivieren und bei Erfassung einer zweiten Gestenbewegung (201) im inneren Bereich der geöffneten Blende (3.1) eine Schließbewegung (103) der Klappeneinheit (3) zu aktivieren.

9. Fahrzeug nach Anspruch 7 oder 8,
wobei die integrierte Berührungssensoreinheit (2.4) eingerichtet ist, bei Erfassung einer Berührung oder Betätigung an einer Außenfläche der geschlossenen Blende (3.1) eine Öffnungsbewegung zu aktivieren und an einer Innenfläche der geöffneten Blende (3.1) eine Schließbewegung (103) der Klappeneinheit (3) zu aktivieren.

10. Fahrzeug nach einem der vorhergehenden Ansprüche,
wobei das Multisensormodul (2) mit einem Antriebsmechanismus für einen Verstellmechanismus (3.2) zum Verstellen der Klappeneinheit (3) signaltechnisch gekoppelt ist.
